# EUROPÄISCHE PATENTSCHRIFT

(11) **EP 2 533 004 B1**
(45) Veröffentlichungstag und Bekanntmachung des Hinweises auf die Patenterteilung: **03.10.2018**
(21) Anmeldenummer: 12004234.6
(22) Anmeldetag: 04.06.2012
(51) Int. Cl.: F41G 7/22, G02B 27/00, G02B 27/64

(54) **Optische Vorrichtung**
Optical device
Dispositif optique

(30) Priorität: 11.06.2011 DE 102011104021
(43) Veröffentlichungstag der Anmeldung: 12.12.2012
(73) Patentinhaber: Diehl Defence GmbH & Co. KG, 88662 ÜBERLINGEN (DE)
(72) Erfinder: Eckhardt, Reiner, 88662 Überlingen (DE); Barenz, Joachim, 88662 Überlingen (DE); Kuppel, Hubert, 78333 Stockach (DE)
(74) Vertreter: Diehl Patentabteilung

(56) Entgegenhaltungen:
- DE-A1- 10 135 222
- DE-A1-102007 019 101
- FR-A1- 2 690 997
- US-A- 5 592 331

## Beschreibung

Die Erfindung betrifft eine optische Vorrichtung zum Ausbilden eines Strahlengangs zwischen einem optischen Endelement an einem Strahlengangende und einer Objektszene, in die der Strahlengang über ein Gesichtsfeld des Endelements gelenkt ist, mit einem Ausrichtmittel zum Verschwenken des Gesichtsfelds relativ zu einer vorbestimmten Richtung, einer Endoptik und einem optischen Gelenk zum Führen des Strahlengangs aus dem verschwenkten Gesichtsfeld in die Endoptik.

Lenkflugkörper sind üblicherweise mit einer optischen Zielverfolgungsvorrichtung ausgerüstet, die einen Suchkopf an der vorderen Spitze des Lenkflugkörpers umfasst. Der Suchkopf ist mit einer Kamera ausgestattet, die das zu erreichende Ziel abbildet, so dass der Lenkflugkörper mit Hilfe einer Bildverarbeitung das Ziel verfolgen kann. Zur hoch aufgelösten Zielerfassung ist das Gesichtsfeld der Kamera in der Regel klein und weist einen Durchmesser von nur wenigen Winkelgraden auf. Um dennoch einen ausgedehnten Bereich einer Objektszene erfassen zu können, kann das Gesichtsfeld verschwenkt werden, z.B. um eine Rollachse und eine Nickachse des Lenkflugkörpers, so dass es in einen interessierenden Bereich der Objektszene gerichtet werden kann. Hierfür umfasst die Kamera ein optisches Gelenk, mit dem der Strahlengang in den interessierenden Bereich der Objektszene gelenkt werden kann bzw. aus diesem Bereich auf den Detektor geführt wird.

Aus der DE 10 2009 029 895 A1 ist ein Suchkopf eines Lenkflugkörpers bekannt, bei dem eine Prismenanordnung ein optisches Gelenk bildet. Bei einem Verschwenken des Gesichtsfelds des Detektors des Suchkopfs wird das vorderste Prisma dieser Anordnung zusammen mit einer Eingangsoptik mit dem Gesichtsfeld mit verschwenkt, wohingegen die nachfolgenden Prismen strukturfest ruhen oder mit einem Rollrahmen mitbewegt werden. Ein ähnlicher Suchkopf ist auch aus der DE 10 2007 019 101 A1 oder der DE 101 35 222 A1 bekannt. Aus der DE 10 2008 026 990 A1 ist ein optisches Gelenk bekannt, das auf Prismen verzichtet und einen Schielwinkel von ± 90° durch Spiegel erreicht. Die FR 2 690 997 A1 zeigt ein Zielerfassungssystem, bei welchem zur Abtastung eines großen Raumwinkelbereichs ein drehbares Doppelprisma verwendet wird.

Die Bildaufnahme der Kamera kann durch Störlicht leicht beeinträchtigt werden, z.B. durch Sonneneinstrahlung, die an Bauteilen der Kamera reflektiert wird, oder durch Abwehrstrahlung des Ziels, z.B. einen Laser. Insbesondere bei Infrarotkameras besteht zusätzlich das Problem, dass von Bauteilen der Kamera abgestrahlte Wärme auf den Detektor der Kamera gelangt und dessen Bilder stört. Aus der US 5 592 331 A ist ein in Bezug auf seine optische Achse ausrichtbarer Adapter bekannt, der mit einem Faltenbalg an einem optischen Instrument befestigbar ist, um einen Strahlungseintritt zwischen dem Adapter und dem optischen Instrument zu verhindern.

Es ist eine Aufgabe der Erfindung, eine optische Vorrichtung mit einem großen optischen Schielwinkel anzugeben, die einen guten Schutz gegen Störstrahlung bietet.

Diese Aufgabe wird durch eine optische Vorrichtung gemäß Patentanspruch 1 gelöst. Die erfindungsgemäße Vorrichtung weist eine Abschirmeinheit mit einem teilweise um das optische Gelenk geführten Abschirmelement auf, die das optische Gelenk vor nicht durch die Ein- oder Austrittsapertur des optischen Gelenks einfallender Einstrahlung abschirmt, insbesondere vor sämtlicher von außerhalb der Abschirmeinheit kommenden und nicht durch die Ein- oder Austrittsapertur des optischen Gelenks einfallender Einstrahlung.

Die Erfindung geht von der Überlegung aus, dass eine Kaltblende um eine Apertur der optischen Vorrichtung einen Infrarotdetektor insbesondere vor Wärmestrahlung aus inneren Bauteilen der Vorrichtung schützt und gegen Abwehrstrahlung eine Blende im Strahlengang verwendet werden kann, solche Maßnahmen allerdings nicht gegen in das optische Gelenk einfallende störender Strahlung helfen. Gerade die Verwendung zumindest eines Prismas für das optische Gelenk führt in besonderem Maße zu einer solchen Störanfälligkeit, da ein Prisma ein besonders sensibler Bereich im Hinblick auf die unerwünschte Einkopplung von unerwünschter Strahlung in den Strahlengang ist. Daher ist - ggf. zusätzlich zu Kalblende und Laserblende - eine Abschirmung um das optische Gelenk mit einem Prisma, aber auch mit anderen optischen Gelenkelementen, besonders vorteilhaft. Die Abschirmung muss sich selbstverständlich nicht auf die von der Abschirmeinheit selbst abgestrahlte Strahlung, insbesondere infrarote Strahlung, beziehen, sondern nur auf von außen einstrahlende Strahlung, insbesondere von außerhalb der Abschirmeinheit.

Die optische Vorrichtung kann zum Führen von Strahlung aus einer Objektszene auf einen Detektor vorbereitet sein, z.B. Teil einer Kamera zum Abbilden der Objektszene auf den Detektor. Insofern kann die optische Vorrichtung einen Schwenkvorsatz für ein Kameraobjektiv sein oder enthalten. Die Endoptik kann eine Detektoroptik sein, die die Abbildung des Gesichtsfelds der Objektszene auf den Detektor bewirkt. Das Strahlengangende kann dann auf dem Detektor liegen.

Ebenfalls möglich und vorteilhaft kann die optische Vorrichtung eine aktive Vorrichtung zum Abstrahlen von Strahlung sein, die durch das Verschwenken des Gesichtsfelds bzw. des optischen Gelenks in eine bestimmte Position der Objektszene gerichtet wird. Gegebenenfalls kann auf einen Detektor verzichtet werden. Die Endoptik kann eine Strahlmodellierungsoptik sein, z.B. zum Formen eines Laserstrahls. Das Strahlengangende kann dann in der Strahlungsquelle liegen.

Das Gesichtsfeld kann das eingangsbezogene Gesichtsfeld eines Detektors sein, also derjenige Sichtbereich, mit dem der Detektor in die Objektszene "sieht", bzw. der auf den Detektor abgebildet wird. Bei Fehlen eines Detektors kann sich das Gesichtsfeld auf das Abstrahlfeld einer Strahlungsquelle in die Objektszene beziehen.

Die optische Vorrichtung kann eine Eingangsoptik aufweisen, die das erste optische Element umfasst, auf das aus der Objektszene kommende Strahlung auftrifft. Das Ausrichtmittel kann ein mechanisches Mittel zum Verschwenken eines optischen Bauteils sein, so dass das Gesichtsfeld verschwenkt wird, beispielsweise ein Mittel zum Verschwenken der Eingangsoptik, sodass diese auf ein Objekt der Objektszene gerichtet werden kann. Die Verschwenkung kann - ganz allgemein - relativ zum Detektor oder - noch allgemeiner - relativ zu einem ortsfesten Element erfolgen, also einem Element, das beispielsweise starr mit einem Gehäuse der optischen Vorrichtung verbunden ist, beispielsweise eine Flugkörperaußenhülle.

Das Verschwenken des Gesichtsfelds erfolgt relativ, also in Bezug zu einer vorbestimmten Richtung. Diese kann eine Rollachse sein, z.B. der optischen Vorrichtung, eines Suchkopfs oder eines Lenkflugkörpers, eine Symmetrieachse oder eine andere, im Vorhinein bestimmte Richtung. Das Verschwenken des Gesichtsfelds ist insbesondere ein Verschwenken um eine Nickachse und kann mithilfe einer Roll-Nick-Vorrichtung erfolgen, durch die das Gesichtsfeld, mit oder ohne eine Eingangsoptik, um eine Nickachse innerhalb eines Schwenkwinkelbereichs, beispielsweise +/-90 Grad, verschwenkt werden kann. Zusätzlich ist es vorteilhaft, wenn das Gesichtsfeld, beziehungsweise eine Eingangsoptik, um eine Rollachse gedreht werden kann, die zweckmäßigerweise eine Symmetrieachse der optischen Vorrichtung ist. Im Falle eines Lenkflugkörpers oder eines Suchkopfes dafür, ist die Rollachse zweckmäßigerweise die Rollachse des Lenkflugkörpers. Vorteilhafterweise kreuzen sich die Roll- und die Nickachse im Zentrum eines teilkugelförmigen Eintrittsfensters der Vorrichtung, beispielsweise eines Doms eines Suchkopfes, rechtwinklig.

Bei Vorhandensein eines Detektors ist ein Bildsensor vorteilhaft, beispielsweise ein Mehrelement-Matrixdetektor. Er ist vorzugsweise mittig und mit seiner Empfangsebene zumindest nahezu rechtwinklig zur Rollachse angeordnet. Dem Detektor ist die Detektoroptik vorgebaut. Der Detektor und die Detektoroptik sind vorzugsweise strukturfest beziehungsweise gehäusefest montiert. Es ist jedoch auch möglich, die Detektoroptik und insbesondere auch den Detektor rollend zu lagern, also um die Rollachse beweglich zu einem Gehäuse, beispielsweise in einem Rollrahmen. Das Gesichtsfeld ist vorzugsweise auf alle Punkte eines Halbraums richtbar, beispielsweise den vorderen Halbraum eines Flugkörpers. Hierzu ist es vorzugsweise um +/-90 Grad um eine Nickachse verschwenkbar und vorzugsweise um eine Rollachse 360° drehbar, wobei auch ein Rollen um eine Rollachse bei einer vorhandenen Nickverschwenkung als Verschwenkung bezeichnet werden kann. Das Gesichtsfeld des Detektors beträgt zweckmäßigerweise zwischen ±2 Grad und ±10 Grad um eine zentrale Richtung.

Die Abschirmeinheit liegt zweckmäßigerweise zwischen einem Gehäuse der optischen Vorrichtung, z.B. einem Suchkopfgehäuse, und dem optischen Gelenk und schirmt das optische Gelenk von in das Gehäuse eingedrungener Strahlung ab. Das Abschirmelement sollte hierbei flächig um das optische Gelenk liegen, vorteilhafterweise um die Ein- und Austrittsfläche eines Prismas des Gelenks, wobei zumindest die Ein- und Austrittsapertur des Gelenks freigegeben bleibt. Die Ein- und Austrittsapertur beziehen sich auf den im Gesichtsfeld verlaufenden Strahlengang. Die Eintrittsapertur kann die Austrittsapertur einer zuvor angeordneten optischen Einheit sein, z.B. einer Eingangsoptik, die Austrittsapertur kann die Eintrittsapertur einer nachfolgenden optischen Einheit sein, z.B. einer Detektoroptik.

Ferner ist es vorteilhaft, wenn das Abschirmelement beweglich zum Gehäuse und/oder zur Rollrahmenstruktur gelagert ist, insbesondere auch beweglich zum optischen Gelenk, so dass die Bewegung des Abschirmelements unabhängig zu allen diesen Elementen sein kann.

Die erfindungsgemäße Vorrichtung umfasst ein mit einer Verschwenkung des Gesichtsfelds mitschwenkendes Schwenkelement, wobei eine Seite des Abschirmelements mit einer Bewegung des Schwenkelements gekoppelt ist und eine andere Seite strukturfest gelagert ist. Auf diese Weise kann das Abschirmelement vor Strahlung, die zwischen diesem Element eintritt, schützen. Zweckmäßigerweise schwenkt das Schwenkelement gleichwinklig mit dem Gesichtsfeld mit. Es kann die Eingangsoptik oder ein anderes Element sein. Die andere Seite kann die entgegengesetzte Seite sein. Die strukturfeste Lagerung kann eine gehäusefeste Lagerung sein. Besonders vorteilhaft ist eine rollrahmenfeste Lagerung. Der Begriff strukturfest schließt eine starre Befestigung an einen Rollrahmen ein.

Vorteilhafterweise ist das Abschirmelement in seiner Bewegung mit einer Bewegung einer Eingangsoptik mechanisch zwangsgekoppelt ist. Das Abschirmelement kann so zuverlässig mit einer Bewegung der Eingangsoptik mitgeführt werden. Weiter ist es vorteilhaft, wenn hierbei ein Kraftfluss zur Bewegung über ein an der Eingangsoptik angreifendes Element geführt ist. Auf diese Weise kann die Eingangsoptik beziehungsweise das daran angreifende Element die Bewegung des Abschirmelements und insbesondere seine Flächenvariation bewirken. Ein Kraftfluss kann von einem Gehäuse oder einem Rollrahmen über das Element auf das Abschirmelement verlaufen.

Außerdem wird vorgeschlagen, dass das Abschirmelement in seiner Abschirmflächenausdehnung variabel ist. Die Flächenausdehnung bezieht sich hierbei auf die Abschirmfläche. Ein mit einer Verschwenkung größer und kleiner werdender Flächenbereich um das optische Gelenk kann so effektiv abgeschirmt werden. Zweckmäßigerweise umfasst die Abschirmung außerdem zumindest ein Variationsmittel, das zur Erzeugung einer an eine Verschwenkung des Gesichtsfelds gekoppelte Variation der Abschirmflächenausdehnung vorbereitet ist.

Eine Variation der Abschirmfläche kann besonders einfach erreicht werden, wenn die Abschirmeinheit zumindest eine Abwickelvorrichtung aufweist und das Abschirmelement abwickelbar ist.

Entsprechend der Erfindung weist die Vorrichtung einen Flächenspender auf, der Abschirmfläche des Abschirmelements ausgeben kann. Er ist zweckmäßigerweise dazu vorbereitet, bei einem Verschwenken des Gesichtsfelds entsprechend zusätzliche Abschirmfläche des Abschirmelements auszugeben. Der Flächenspender kann Rolle sein, auf die das Abschirmelement teilweise aufgewickelt ist.

Eine gute Anpassung des Abschirmelements an eine benötigte Abschirmfläche kann erreicht werden, wenn das Abschirmelement eine Folie ist. Besonders geeignet ist eine Metallfolie, da diese auch Radarstrahlung abschirmen kann, die zur Bildstörung verwendet wird.

Außerdem wird vorgeschlagen, dass das Abschirmelement so gelagert ist, dass es sich bei einer Verschwenkung des Gesichtsfelds rutschfrei auf eine Auflage auflegt. Ein Kraftaufwand zur Bewegung des Abschirmelements kann hierdurch gering gehalten bleiben.

Weiter wird vorgeschlagen dass die Abschirmeinheit einen Antrieb aufweist, der eine Bewegung des Abschirmelements von einer strukturfesten Seite des Abschirmelements aus antreibt. Auf diese Weise kann eine Bewegung schnell und kraftarm geführt werden. Die Strukturfestigkeit bezieht sich zweckmäßigerweise auf eine gehäusestarre, insbesondere eine rollrahmenstarre Befestigung. Der Antrieb greift zweckmäßigerweise an der strukturfesten Seite am Abschirmelement an.

Eine Beanspruchung des Abschirmelements kann gering gehalten sein, wenn der Antrieb so ausgeführt ist, dass er das Abschirmelement bei dessen Bewegung zugfrei hält.

Besonders vorteilhaft ist es, wenn die Abschirmeinheit eine Rolle aufweist, auf der das Abschirmelement teilweise aufgerollt ist und der Antrieb ein Drehen der Rolle antreibt. Ist das Drehen unabhängig von einem Zug des Abschirmelements auf die Rolle, so wird das Abschirmelement nur gering gelastet.

Eine gute Bewegungsführung des Abschirmelements kann erreicht werden, wenn der Antrieb mit einer Bewegung einer Eingangsoptik zwangsgekoppelt ist.

Eine einfache und zuverlässige Ausführung des Antriebs besteht darin, dass der Antrieb ein Zahnrad aufweist, das mit einem mit dem Gesichtsfeld starr gekoppelten Zahnrad kämmt. Die starre Kopplung kann auch mit der Eingangsoptik erfolgen.

Eine weitere vorteilhafte Ausführungsform der Erfindung sieht vor, dass die Abschirmeinheit einen um das Gelenk geführten Rahmen mit einer Öffnung zur Hindurchführung des Strahlengangs aufweist und das Abschirmelement so gelagert ist, dass es bei einer Verschwenkung des Gesichtsfelds auf den Rahmen rutschfrei aufgelegt wird. Durch die Rutschfreiheit kann eine exakte Führung und geringe Beanspruchung des Abschirmelements erreicht werden.

Besonders geeignet ist die Erfindung in Zusammenhang mit einem optischen Gelenk, das ein Umkehrprisma mit einer Eintrittsfläche, einer Austrittsfläche und einer Reflektionsfläche aufweist. Hierbei ist es vorteilhaft, wenn das Abschirmelement sowohl um die Eintrittsfläche als auch um die Austrittsfläche teilweise herum geführt ist, so dass beide Flächen gegen eine unerwünschte Einstrahlung geschützt werden können. Das Umkehrprisma kann so angeordnet sein, dass in der optischen Achse des Gelenks verlaufende Strahlen zur Reflektionsfläche des Umkehrprismas hin gebrochen und von dieser reflektiert werden.

Mit einem Umkehrprisma können die optischen Eigenschaften eines Spiegels und eines Prismas miteinander kombiniert werden. Es ermöglicht die optische Weiterleitung eines von vorne eintreffenden Strahls nach hinten, was mit einem einfachen Spiegel nicht möglich wäre, und die Realisierung eines Schielwinkels beziehungsweise einer Gesichtsfeldverschwenkung von ±90 Grad und mehr. Eine serielle Anordnung von mehreren Spiegeln beziehungsweise Prismen ist nicht notwendig, weshalb eine sehr kompakte Bauweise des optischen Gelenks erreicht werden kann.

Das Umkehrprisma kann eine parallel zur optischen Achse ausgerichtete Hypotenusenfläche aufweisen. Die Ausrichtung der optischen Achse kann sich hierbei auf den Strahlengang vor dem Umkehrprisma beziehen, also zwischen der Objektszene und dem Umkehrprisma. Die Parallelität tritt zweckmäßigerweise bei unverschwenktem Gesichtsfeld auf. Auf diese Weise kann - unter der Verwendung der Hypotenusenfläche als Spiegelfläche - ein von vorne in das Umkehrprisma eintretender Strahl in gleicher Richtung nach hinten aus dem Umkehrprisma herausgeführt werden, sodass eine in der Strahlrichtung unveränderte Auslenkung des Strahls aus dem Umkehrprisma, verbunden mit einer jedoch für die Strahlrichtung belanglosen Bildspiegelung, ermöglicht wird.

Eine Verschwenkung des Gesichtsfelds um ±90 Grad kann in besonders einfacher Weise ermöglicht werden, wenn das optische Gelenk zwei im Strahlengang gleich wirkende Umkehrprismen aufweist, die zweckmäßigerweise im Strahlengang nebeneinander, übereinander oder allgemein: benachbart, angeordnet sind. Strahlung aus der Objektszene kann gleichzeitig auf die beiden Umkehrprisma gelenkt werden, die vorteilhafterweise parallel im Sinne von nicht seriell angeordnet sind. Die beiden Prismen können in mehreren Arten zueinander angeordnet sein, zweckmäßigerweise aufeinander gestapelt sein. Grenzen die beiden Umkehrprismen jedoch an ihren Hypotenusenflächen aneinander, so kann ein besonders kompaktes optisches Gelenk mit hoher Strahlungsausbeute geschaffen werden. Eine besonders kompakte Anordnung kann erreicht werden, wenn die beiden Umkehrprismen mit ihren Reflektionsflächen aufeinander liegen. Sie können hierbei einen optischen Würfel bilden.

Weiter ist es vorteilhaft, wenn beide Umkehrprismen- in Verbindung mit der Detektoroptik - jeweils ein Gesamtbild der Objektszene auf den Detektor abbilden. Diese Gesamtbilder liegen übereinander, sodass ein Punkt auf der Objektszene durch beide Umkehrprismen auf denselben Punkt am Detektor abgebildet wird.

Das optische Gelenk enthält ein Umkehrprisma, wobei auch mehrere Umkehrprismen, insbesondere zwei Umkehrprismen vorteilhaft sind, die zweckmäßigerweise aufeinander gestapelt sind. Die Reflektionsflächen sind hierbei zweckmäßigerweise parallel zueinander angeordnet. Vorteilhafterweise werden alle optischen Eigenschaften des optischen Gelenks nur durch das zumindest eine Umkehrprisma erreicht, so dass auf zusätzliche Bauteile verzichtet werden kann. Weiter ist es vorteilhaft, wenn die Umkehrprismen des optischen Gelenks starr zueinander angeordnet sind, so dass die optischen Schwenkeigenschaften durch die zueinander starren Prismen zustande kommen. Auf diese Weise kann die Mechanik des optischen Gelenks einfach gehalten sein. Die optische Achse des optischen Gelenks kann parallel zur Mittenachse des aus dem Gesichtsfeld einfallenden oder vom Gelenk ausgerichteten Strahlenbündels sein.

Das Umkehrprisma ist ein Prisma mit zumindest einer Reflektionsfläche, an der der Strahlengang zumindest teilweise gespiegelt wird. Es ist vorzugsweise ein einziges Prisma mit einer Eintrittsfläche, zumindest einer von dieser verschiedenen Reflektionsfläche und zweckmäßigerweise mit einer von den beiden erstgenannten Flächen verschiedenen Aüstrittsfläche. Besonders geeignet ist eine Dachkantprisma, insbesondere ein Dove-Prisma. Zweckmäßigerweise ist das Umkehrprisma so in der optischen Vorrichtung angeordnet, dass der Strahlengang an nur einer Reflektionsfläche nur einmal gespiegelt wird. Die Spiegelfläche ist vorzugsweise eine Hypotenusenfläche des Prismas, sie ist zweckmäßigerweise verspiegelt, wobei die Verspiegelung jedoch nicht notwendig ist. Besonders vorteilhaft ist es, wenn die Firstlinie des Umkehrprismas parallel zur Nickachse verläuft. Der Kompaktheit ist es außerdem förderlich, wenn die Verschwenkachse beziehungsweise die Nickachse parallel zur Hypotenusenfläche verläuft, insbesondere in der Hypotenusenfläche liegt.

Im Umkehrprisma wird ein in eine vordere Dachfläche fallendes paralleles Strahlenbündel zweckmäßigerweise zur Hypotenusenfläche hin gebrochen, dort reflektiert und an der hinteren Dachfläche erneut gebrochen und somit als gespiegeltes Strahlbündel ausgegeben. Zweckmäßigerweise bleiben die sonstigen optischen Strahleigenschaften unverändert. Auf diese Weise können die so gewonnenen hinteren Strahlbündel ohne weitere optische Maßnahmen in eine übliche Detektoroptik eingeführt werden. Wird das Umkehrprisma durch Drehung der Schwenkachse beziehungsweise Nickachse senkrecht zur Rollachse verschwenkt, so werden aus Sicht des Detektors die Strahlenbündel am Eingang der Prismen aufgrund der Spiegelung im Prisma um den doppelten Winkel gedreht. Eine mechanische Prismenverkippung um 45 Grad erzeugt somit die geforderte beziehungsweise vorteilhafte optische Schielwinkelkippung um 90 Grad.

Das Material des Umkehrprismas hängt von der verwendeten Strahlungsfrequenz ab. Zweckmäßigerweise ist der Detektor ein Infrarotdetektor und das Material des Umkehrprismas ist ein für infrarote Strahlung transparentes Material, insbesondere Silizium. Die Form des Umkehrprismas, insbesondere der Winkel zweier Dachflächen und einer Hypotenusenfläche des Umkehrprismas zueinander, kann vom Brechungsindex und somit von der Strahlungsfrequenz und dem Material abhängig gemacht werden. Insbesondere wird der Gesichtsfelddurchmesser bei der Geometriewahl des Prismas berücksichtigt sein, da ein großes Gesichtsfeld mit einer großen Strahldivergenz, auch im Prisma, verbunden ist. So sollten vorteilhafterweise alle in das Umkehrprisma einfallenden Strahlen - auch unter verschiedenen Einfallswinkel entsprechend der Ausdehnung des Gesichtfelds - in Richtung zum Detektorobjektiv wieder aus dem Umkehrprisma herausgeführt werden.

Eine weitere vorteilhafte Ausführungsform der Erfindung sieht vor, dass die Verschwenkachse der Gesichtsfeldverschwenkung durch ein Symmetriezentrum des optischen Gelenks verläuft. Das Symmetriezentrum kann ein geometrischer Mittelpunkt, ein geometrisches Zentrum einer Spiegelebene, ein Gewichtsschwerpunkt, ein Mittelpunkt einer Kreuzungslinie zweier Symmetrieebenen oder dergleichen sein. Durch diese Anordnung kann das optische Gelenk besonders kompakt gehalten werden.

Im Prinzip steht der Wunsch nach einer kompakten Bauform dem Vorteil einer großen Eintrittsapertur der Vorrichtung entgegen. Um dennoch eine Eintrittsapertur der Vorrichtung zu erreichen, die größer als die Eintrittsapertur des optischen Gelenks ist, ist es vorteilhaft, eine Eingangsoptik vor dem optischen Gelenk vorzusehen. Die Eingangsoptik ist zweckmäßigerweise so ausgeführt, dass sie den aus der Objektszene einfallenden Strahlengang verdichtet, so dass also der durch die Eintrittsapertur der Eingangsoptik tretende Strahlengang in der Austrittsapertur verdichtet ist, die Austrittsapertur beispielsweise kleiner als die Eintrittsapertur ist. Hierdurch kann der verdichtete Strahlengang unmittelbar auf das optische Gelenk gerichtet werden, das hierdurch klein gehalten werden kann. Auf diese Weise kann eine große Eintrittsapertur der optischen Vorrichtung mit einer kompakten Bauweise des optischen Gelenks verbunden werden.

Die Verdichtung der Eingangsoptik erfolgt zweckmäßigerweise um den Faktor von 1,2 bis insbesondere 10. Der Faktor bezieht sich zweckmäßigerweise auf das Durchmesserverhältnis der Eintrittsapertur zur Austrittsapertur der Eingangsoptik. Zweckmäßigerweise ist die Eingangsoptik das erste optische Mittel der Vorrichtung, in das der unverändert von der Objektszene kommende Strahlengang zuerst auftrifft, gegebenenfalls abgesehen von einem Eintrittsfenster, beispielsweise einem Suchkopfdom.

Eine Eingangsoptik vor dem optischen Gelenk, also zwischen dem optischen Gelenk und der Objektszene ist zweckmäßigerweise afokal, sodass ein paralleler Strahleneinfall von der Objektszene parallel auf das optische Gelenk gelenkt wird. Hierdurch können durch die Verschwenkung verursachte Bildfehler gering gehalten oder sogar vermieden werden.

Weiter wird vorgeschlagen, dass die Eingangsoptik optische Eigenschaften eines von der Umgebung mechanisch abschirmenden Eintrittfensters, beispielsweise eines Suchkopfdoms, ausgleicht. Der Ausgleich geschieht zweckmäßigerweise so, dass eine Afokalität zum optischen Gelenk erhalten bleibt. Im Sinne einer solchen afokalen Eingangsoptik kann das Eintrittsfenster auch als Bestandteil der Eingangsoptik verstanden werden.

Zum Vermeiden von durch eine Verschwenkung hervorgerufenen Bildstörungen ist es weiter vorteilhaft, wenn das optische Gelenk afokal ist. Hierdurch kann ermöglicht werden, dass der Strahlengang sowohl vor als auch nach dem optischen Gelenk parallel ist.

Das optische Gelenk führt einen Strahlengang einer Verschwenkung des Gesichtsfelds nach, sodass das Gesichtsfeld auf den Detektor abgebildet bleibt. Die Größe der Abbildung, beispielsweise ein flächiges Bild oder auch nur ein Punkt, ist hierbei unerheblich. Zum optischen Nachführen ist das optische Gelenk zweckmäßigerweise mit einem Rotationsmittel zum Drehen zumindest eines Teils des optischen Gelenks, insbesondere des gesamten optischen Gelenks, versehen. Vorteilhafterweise ist dieses so ausgeführt, dass das optische Gelenk mit stets dem halben Schwenkwinkel des Gesichtsfelds mitgeschwenkt wird. Hierbei werden zweckmäßigerweise alle optischen Elemente des optischen Gelenks synchron gedreht. Die Drehachse des Drehens ist zweckmäßigerweise die Verschwenkachse beim Verschwenken des Gesichtsfelds. Das Rotationsmittel kann ein Rotationsantrieb sein. Es ist jedoch bereits ausreichend, wenn es ein Lager aufweist, das zur einer Rotation des Gelenks dient.

Das Ausrichtmittel und das Rotationsmittel können getrennt voneinander angesteuert bewegt werden, wobei eine Synchronisierung der Bewegung zur Lagekonstanz der Abbildung des Gesichtsfelds auf den Detektor sinnvoll ist. Eine besonders einfache Synchronisierung kann erreicht werden, wenn das Ausrichtmittel und das Rotationsmittel mechanisch zwangsgekoppelt sind. Eine solche Zwangskopplung kann beispielsweise über ein Getriebe erfolgen.

Mechanische Belastungen bei einer solchen Zwangskopplung können gering gehalten werden, wenn ein Kraftfluss zum Drehen des Gelenks über das Ausrichtmittel in das Rotationsmittel geführt ist. Da das Ausrichtmittel mit dem doppelten Winkel wie das Rotationsmittel dreht, erfolgt hierdurch eine Untersetzung der Drehung, die mechanisch schonend ist.

Weiter ist es vorteilhaft, wenn eine Eingangsoptik und das optische Gelenk jeweils in ihrer Bewegung zum Verschwenken des Gesichtsfelds unabhängig voneinander gelagert sind. Die Lagerung kann in einem Rollrahmen erfolgen, so dass beide Elemente rollbar sind.

Vor und nach dem optischen Gelenk kann in besonders einfacher Weise ein paralleler Strahlengang hergestellt werden. Die Parallelität bezieht sich auf parallel in die Eintrittsapertur der optischen Vorrichtung einfallende Strahlen. Wegen eines flächigen Gesichtsfelds liegen natürlich nicht nur parallele Strahlen vor, wobei diese Nichtparallelität jedoch nicht im Widerspruch zum hier verwendeten Begriff des parallelen Strahlengangs steht.

Die Erfindung ist außerdem gerichtet auf einen Suchkopf für einen Lenkflugkörper mit einer wie oben beschriebenen optischen Vorrichtung. Zweckmäßigerweise umfasst der Suchkopf ein teilkugelförmiges Eintrittsfenster in Form eines Doms mit einem Kugelzentrum. Der Suchkopf kann besonders kompakt beziehungsweise lichtstark ausgeführt werden, wenn die Schwenkachse der Gesichtsfeldverschwenkung durch das Kugelzentrum verläuft. Insbesondere ist auch das Symmetriezentrum des optischen Gelenks im Kugelzentrum angeordnet.

Außerdem ist die Erfindung auf einen Lenkflugkörper mit einem wie oben beschriebenen Suchkopf gerichtet.

Weitere Vorteile ergeben sich aus der folgenden Zeichnungsbeschreibung. In der Zeichnung sind Ausführungsbeispiele der Erfindung dargestellt. Weder ist die Erfindung auf diese Ausführungsbeispiele beschränkt - auch nicht in Bezug auf funktionale Merkmale, noch sind die Ausführungsbeispiele getrennt voneinander zu sehen. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit der erfindungsgemäßen Vorrichtung des unabhängigen Anspruchs kombinierbar. Das Gleiche gilt für Merkmale eines jeden Ausführungsbeispiels der nachfolgenden Figurenbeschreibung, die explizit isoliert betrachtet und mit der erfindungsgemäßen Vorrichtung kombinierbar sind.

Es zeigen:
- Fig. 1: einen Lenkflugkörper mit einem Suchkopf,
- Fig. 2: den Suchkopf des Lenkflugkörpers aus Figur 1 in einer schematischen Schnittdarstellung,
- Fig. 3: die Eingangsoptik und das optische Gelenk des Suchkopfs aus Figur 2 in einer perspektivischen Darstellung, einschließlich einer Abschirmeinheit,
- Fig. 4: eine schematische Schnittzeichnung einer Draufsicht auf den Suchkopf aus Figur 2,
- Fig. 5-7: Strahlengänge durch die optische Vorrichtung des Suchkopfs bei nach vorne gerichteter Eingangsoptik, schräg zur Seite und 90 Grad gekippter Eingangsoptik,
- Fig. 8: eine Abschirmeinheit um das optische Gelenk des Suchkopfs in einer teilgeschnittenen Darstellung und
- Fig. 9: eine schematische Darstellung eines Funktionselements innerhalb der optischen Vorrichtung.

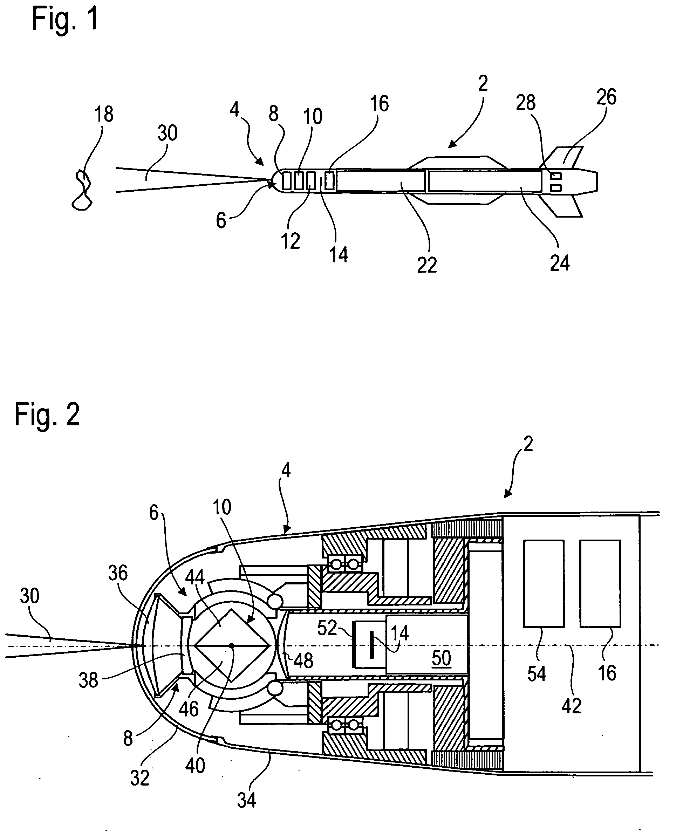

Figur 1 zeigt einen Lenkflugkörper 2 mit einem Suchkopf 4, der eine optische Vorrichtung 6 aufweist mit einer Eingangsoptik 8, einem optischen Gelenk 10, einer Detektoroptik 12 und einem Detektor 14. Die Detektoroptik 12 dient in diesem Ausführungsbeispiel als Endoptik und der Detektor 14 als Endelement im Sinne der Erfindung. Eine Steuereinheit 16 des Lenkflugkörpers 2 dient zum Steuern der beweglichen Teile der optischen Vorrichtung 6 und zur Durchführung einer Bildverarbeitung von Bildern einer Objektszene 18, die durch die optische Vorrichtung 6 auf den Detektor 14 abgebildet wurde. Außerdem enthält der Lenkflugkörper 2 einen Wirkeinsatz 22, einen Raketenmotor 24, ein Leitwerk 26, das von Aktuatoren 28, die von der Steuereinheit 16 anhand von Signalen der Bildverarbeitung angesteuert werden, bewegt wird.

Eine schematische Schnittzeichnung in einer Draufsicht auf den Suchkopf 4 ist in Fig. 2 dargestellt. Der Suchkopf 4 ist mit einem transparenten Dom 32, aus beispielsweise Saphir, ausgestattet, der fest in die Außenhülle 34 des Lenkflugkörpers 2 eingefügt ist. Hinter dem Dom 32 ist die optische Vorrichtung 6 angeordnet, wobei der Dom 32 als Bestandteil der optischen Vorrichtung 6 oder separate Einheit aufgefasst werden kann. Die Eingangsoptik 8 ist mit zwei Linsen 36, 38 ausgestattet, die gemeinsam um eine Nickachse 40 verschwenkbar und eine Rollachse 42 des Lenkflugkörpers 2 rotierbar sind. Die Verschwenkbarkeit um die Nickachse 40 beträgt ±90 Grad, sodass das Gesichtsfeld 30 der optischen Vorrichtung 6 beziehungsweise des Detektors 14 in den gesamten vorderen Halbraum verschwenkbar ist. Die Größe des rechteckigen Gesichtsfelds des Detektors 14 ist ca. 3° x 3°, wobei dessen Gesichtsfeld 30 in die Objektszene 18 durch die Eingangsoptik 8 kreisförmig ±3° ist und somit einen Durchmesser von etwa 6° aufweist.

Das optische Gelenk 10 umfasst zwei Umkehrprismen 44, 46, die jeweils an ihrer Hypotenusenfläche aufeinander gelegt sind. Zusammen bilden die beiden Umkehrprismen 44, 46 einen optischen Würfel, der ebenfall um die Nickachse 40 verschwenkbar ist und um die Rollachse 42 gedreht werden kann.

Zwischen dem optischen Gelenk 10 und dem Detektor 14 ist eine durch eine Linse 48 schematisch dargestellte Detektoroptik 10 angeordnet, durch die der Ausschnitt des Gesichtsfelds 30 der Objektszene 18 auf den Detektor 14 abgebildet wird. Der Detektor 14 ist ein Infrarot-Detektor, der im mittleren Infrarot empfindlich ist. Es sind jedoch auch beliebige andere Spektralempfindlichkeiten möglich und vorteilhaft. Zum Kühlen des Detektors 14 ist ein Kühler 50 vorhanden, dessen Kühlerfenster 52 zwischen der Detektoroptik 12 und den Detektor 14 angeordnet ist. Im hinteren Bereich des Suchkopfs 4 sind eine inertiale Messeinheit 54 und die Steuereinheit 16 angeordnet, die jeweils nur schematisch angedeutet sind.

Der Detektor 14 ist als Bildsensor in Form eines Matrixdetektors mit einer Vielzahl von matrixförmig angeordneten Detektorelementen ausgeführt, dessen Flächenzentrum auf der Rollachse 42 und damit bei jedem Nickwinkel immer auf der optischen Achse, also im Zentrum des Gesichtsfelds 30 liegt.

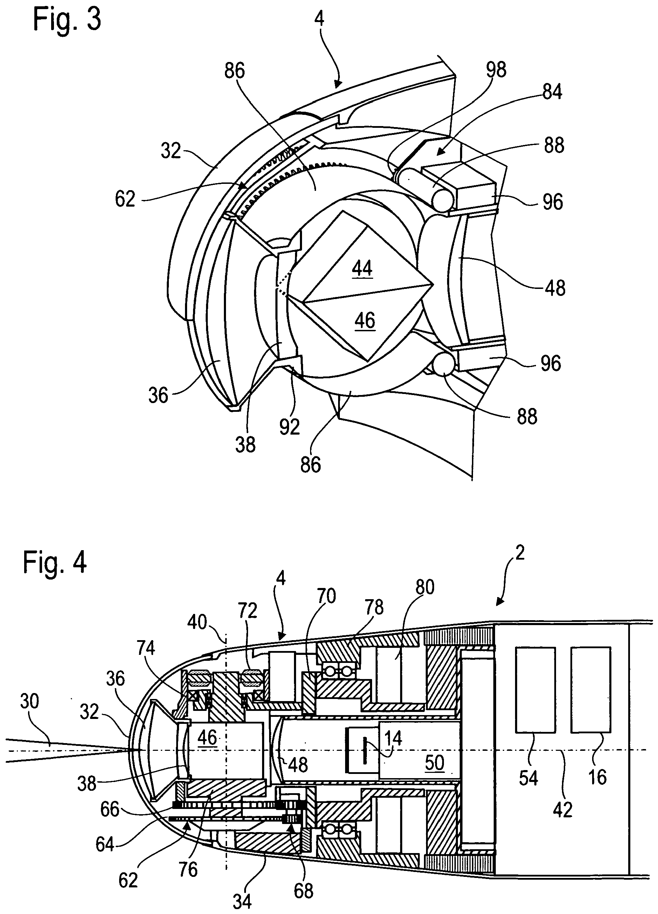

Fig. 3 zeigt eine leicht schematisierte perspektivische Ansicht auf den vorderen Teil des Suchkopfs 4. Die Darstellung ist entsprechend der Fig. 2 in einem senkrechten Schnitt gezeichnet, sodass die beidem Umkehrprismen 44, 46 sowie die Linsen 36, 38, 48 in der Mitte geschnitten dargestellt sind. Weitere Einzelheiten im unteren Bereich des Suchkopfs 2 sind weggelassen, ebenso wie die untere Hälfte des Doms 32.

In Fig. 4 ist der Suchkopf 4 in einer geschnittenen Ansicht von unten dargestellt, sodass beispielsweise hinsichtlich des optischen Gelenks 10 von unten auf das Umkehrprisma 46 geschaut wird.

### Optische Elemente und Strahlengang

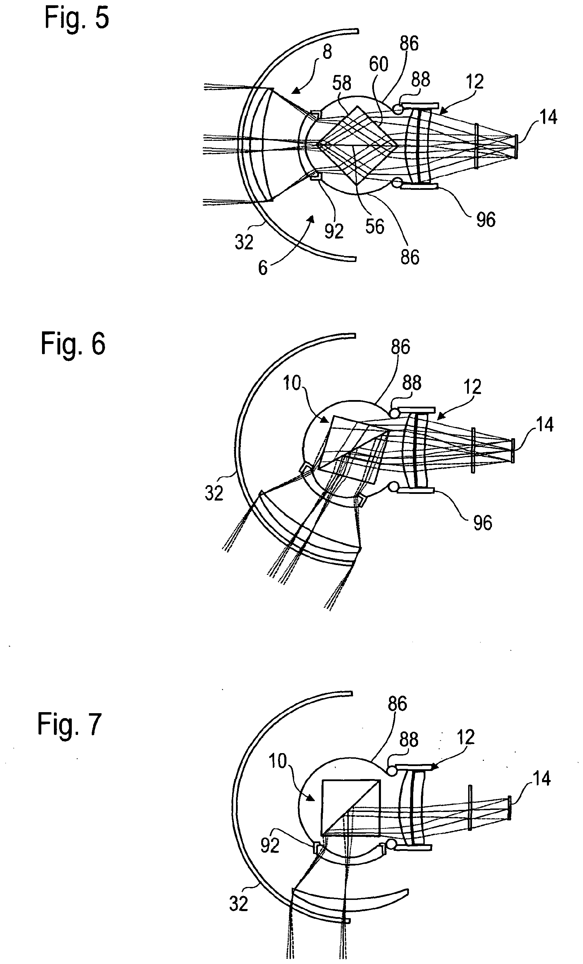

Anhand der Schnittbildzeichnung aus Fig. 2 und den Strahlengangzeichnungen aus den Figuren 5, 6 und 7 wird im Folgenden die optische Abbildung von Objekten aus der Objektszene 18 auf den Detektor 14 erläutert. Zu detektierende Strahlung kommt aus dem Sichtszenarium des Suchkopfs 4 mit Hintergrund- und Zielobjekten, die im Gesichtsfeld 30 zu liegen kommen. Das Gesichtsfeld 30 wird im Betrieb durch Drehung einzelner Optikelemente mittels eines Roll-Nick-Rahmensystems ausgerichtet. Die Ausrichtung erfolgt zum Beispiel durch einen Pilot eines den Lenkflugkörper tragenden Flugzeugs oder durch ein Radar des Trägerflugzeugs. Der genutzte Winkel der Eintrittsstrahlung variiert im Sichtwinkelbereich der Optik um circa ±3 Winkelgrade zu ihrer mittigen optischen Achse, der Sichtlinie des Suchkopfs 4. Damit und infolge der relativ weiten optischen Arbeitsentfernung bei der Zielerkennung und Zielverfolgung durch den Suchkopf 4 bilden sich die Objekte des Szenariums aus nahezu paralleler Strahlung auf den Detektor 14 ab.

Die Eintrittsapertur der um die Nickachse 40 und Rollachse 42 schwenkbaren Eingangsoptik 8 ist durch die Öffnung der Eintrittslinse 36 aber auch durch die Abschattung des Domrandes bei großen Schielwinkeln bestimmt, wie in Fig. 7 dargestellt ist. Bis zu einer Nickauslenkung von 60° von der Rollachse 42, die die Axialrichtung des Lenkflugkörpers 2 ist, findet keine Domabschattung statt, wie in Fig. 6 zu sehen ist. Es kann die volle Eintrittsapertur der Eintrittslinse 36 genutzt werden. Ab etwa 60° Nickwinkelauslenkung beginnt die Domabschattung, die sich bis 90° Nickwinkelauslenkung auf etwa 50 % erhöht. Dieser prinzipbedingte Effekt bewirkt bei einer so großen Nickwinkelauslenkung eine um circa 30% reduzierte Auffassreichweite des Suchkopfs 4. Für den symmetrischen, kugelabschnittsförmigen Dom 32 gilt dies für jede Position beziehungsweise Ausrichtung des Gesichtsfelds 3 um die Rollachse 42 mit entsprechenden Nickwinkeln.

Die Eingangsoptik 8 ist als thermisch stabiles Afokal ausgeführt, sie ist also eine afokale Optik. Ein paralleler Strahlengang, in den Figuren 5 bis 7 durch durchzogene Linien dargestellt, wird somit durch die Eingangsoptik 8 parallel auf das optische Gelenk 10 geführt. Allerdings wird der Strahlengang verdichtet, im gezeigten Ausführungsbeispiel um den Durchmesserfaktor 2 beziehungsweise Flächenfaktor 4, wobei auch andere solche Verhältnisse aus Eintrittsapertur zu Austrittsapertur zwischen 1,1 und 10 denkbar und vorteilhaft sind. Besonders vorteilhaft ist es daher, dass die Eintrittsoptik 8 die Eintrittsstrahlung in ein optisches äquivalentes, jedoch verdichtetes Strahlenbündel umsetzt. Je nach Dom 32 ist es herbei möglich und gegebenenfalls vorteilhaft, die optische Wirkung des Doms 32 zu kompensieren, sodass sich das Afokal und die äquivalente Umsetzung auf die Eintrittsstrahlung vor dem Dom 32 beziehen. Aus optischer Sicht und Sicht der Wuchtung und Massenträgheit sind leichte Linsen 36, 38 vorteilhaft, beispielsweise aus Silizium.

Die Umlenkung des Strahlenbündels erfolgt über den symmetrisch im Domzentrum und um die Nickachse 40 und Rollachse 42 drehbar angeordneten Prismenblock, der hinsichtlich der optischen Elemente das optische Gelenk 10 bildet. Dessen zwei gleiche und gleichschenklige Umkehrprismen, in diesem Ausführungsbeispiel Dove-Prismen, sind jeweils an ihrer Hypotenusefläche 56 deckend aufeinander gelegt. Die Querachsen der Hypotenusefläche 56 liegen damit auf der Nickachse 40 und das Flächenzentrum der Hypotenusefläche 56 im Domzentrum, in dem sich auch die Nickachse 40 und die Rollachse 42 kreuzen. Das Symmetriezentrum des optischen Gelenks 10 liegt in der Verschwenkachse beziehungsweise Nickachse 40.

Einfallende Strahlen werden an der Eintrittsfläche 58 der beiden Umkehrprismen 44, 46 zur Hypotenusefläche 56 hin gebrochen und dort zur Austrittsfläche 60 reflektiert, in der die Strahlen das Umkehrprisma 44 beziehungsweise 48 wieder verlassen. Die Hypotenusenflächen 56 der Prismen 44, 46 können hierbei verspiegelt sein, um einen Reflektionsanteil zu erhöhen. Diese Verspiegelung kann für die Verwendung bei bestimmten Spektren vorteilhaft sein. Die Hypotenuseflächen 56 sind bei unverschwenktem Gesichtsfeld parallel zur optischen Achse des Strahlengangs vor der optischen Vorrichtung 6 und parallel zur optischen Achse des Strahlengangs vor dem optischen Gelenk 10 ausgerichtet.

Aufgrund der bekannten optischen Wirkfunktion eines Dove-Prismas wird das Strahlenbündel aus der Eingangsoptik 8 über beide Umkehrprismen 44, 46 exakt mit dem doppelten Winkel zur einfallenden Strahlrichtung um die Nickachse 40 und in Richtung längs zur Rollachse 42 gelenkt. Das einfallende Pupillenbündel fällt hierbei auf beide Prismen 44, 46 und wird hierdurch geteilt, gespiegelt und optisch versetzt ausgegeben. In beiden resultierenden Strahlbündeln bleiben jedoch die abbildenden optischen Eigenschaften erhalten, sodass letztendlich auf dem Detektor 14 zwei sich deckende Abbildungen des Gesichtsfelds-Szenariums erzeugt werden. Ist das Gesichtsfeld 30 parallel zur Rollachse 42 und somit zur Symmetrieachse der optischen Vorrichtung 6 ausgerichtet, so wird das einfallende Pupillenbündel exakt hälftig auf die beiden Umkehrprismen 44, 46 aufgeteilt: Dies ist in Fig. 5 abgebildet. Mit zunehmenden Nickwinkel wird das einfallende Pupillenbündel immer asymmetrischer auf nur eines der Umkehrprismen 44, 46 abgebildet, wobei bei einem Nickwinkel von 90° das Pupillenbündel nur noch vollständig auf eines der Umkehrprismen 44, 46 abgebildet wird, wie in Fig. 7 dargestellt ist.

Die beiden Umkehrprismen 44, 46 sind aus Silizium gebildet und zeichnen sich damit durch eine im Infraroten sehr günstige Brechzahl und eine thermische Stabilität aus. Vorteilhaft ist ferner das niedrige Gewicht, das für eine Anwendung in Flugkörpern vorteilhaft ist.

Die Detektoroptik 12 ist eine abbildende Optik, die auch ohne die Eingangsoptik 8 und das optische Gelenk 10 zur Abbildung der Objektszene 18 einsetzbar wäre. Insofern sind die drei optischen Einheiten Eingangsoptik 8, optisches Gelenk 10 und Detektoroptik 12 voneinander unabhängig einsetzbar. Sie sind auch unabhängig voneinander thermisch passiviert.

### Mechanischer Aufbau

Die Winkelverdopplung des optischen Gelenks 10 erfordert, dass der Prismenblock gegenüber der Eintrittsoptik 8 - ausgehend von der Nullposition des Rahmensystems parallel zur Rollachse 42, also bei einem Schielwinkel von 0°, bis zur maximalen Nickauslenkung - stets nur um den halben Nickwinkel gedreht werden darf. Dazu ist die Eingangsoptik 8 auf der Nickachse 40 gegenüber dem optischen Gelenk 10 mechanisch getrennt drehbar gelagert. Eine 2:1-Kopplung der Drehwinkel kann hierbei durch eine separate Drehansteuerung der beiden Elemente erfolgen. Im gezeigten Ausführungsbeispiel erfolgt die mechanische Kopplung jedoch durch ein Getriebe 62, insbesondere ein Zahnradgetriebe (siehe Figuren 3 und 4). Das Getriebe 62 umfasst ein erstes Zahnrad 64 und ein zweites Zahnrad 66, die über zwei fest miteinander gekoppelte Stirnräder 68 miteinander verbundnen sind. Das erste Zahnrad 64 ist starr mit dem Prismenblock verbunden und das zweite Zahnrad 66 mit der Eingangsoptik 8. Durch die Getriebeverbindung der Stirnräder 68 sind die beiden Zahnräder 64, 66 starr in einem Rotationsverhältnis von 2:1 miteinander verbunden.

Der Nickbewegungsantrieb sowohl der Eingangsoptik 8 als auch des optischen Gelenks 10 erfolgt bei diesem Ausführungsbeispiel über einen elektromagnetischen Direktantrieb 72, der sich am Rollrahmen 70 abstützt. Der Antrieb 72 ist in Fig. 4 gegenüber dem Getriebe 62 dargestellt, es ist jedoch möglich ihn im Getriebe 62 zu integrieren. Im gezeigten Ausführungsbeispiel treibt der Antrieb 72 die Nickbewegung der Eingangsoptik 8 direkt und des optischen Gelenks 10 indirekt über die Nickbewegung der Eingangsoptik 8 an. Ein Kraftfluss erfolgt hierbei vom Rollrahmen 70 über den Antrieb 72 auf eine Stützstruktur 74 der Eingangsoptik 8 und von dort über das Getriebe 62 auf eine Stützstruktur 76 des optischen Gelenks 10. Durch die Winkelkopplung wird der Kraftfluss durch das Getriebe 62 um das Verhältnis 2:1 untersetzt, wodurch ein verschleißarmer Betrieb der Mechanik und insbesondere des Getriebes 62 erfolgen kann. Auch die Lagerung des optischen Gelenks 10 beziehungsweise von dessen Stützstruktur 76 kann an der Eingangsoptik 8 beziehungsweise dessen Stützstruktur 74 erfolgen. Im gezeigten Ausführungsbeispiel sind diese beiden Elemente jedoch separat und unabhängig voneinander, also nicht übereinander, im Rollrahmen 70 gelagert.

Der Antrieb 72 kann als Ausrichtmittel zum Verschwenken des Gesichtsfelds 18 gesehen werden. Als Ausrichtmittel kann auch die Lagerung der Stützstruktur um die Nickachse 42 verstanden werden.

Der Rollrahmen 70 ist um die Rollachse 42 drehbar zu einer Gehäusestruktur 78 gelagert, die fest und starr mit der Außenhülle 34 des Suchkopfs 4 beziehungsweise des Lenkflugkörpers 2 verbunden ist. Der Rollantrieb erfolgt hierbei über einen Direktantrieb 80 zwischen dem Rollrahmen 70 und der Gehäusestruktur 78. Da die Eingangsoptik 8 und das optische Gelenk 10 im Rollrahmen 70 gelagert sind, sind diese auch drehbar um die Rollachse 42.

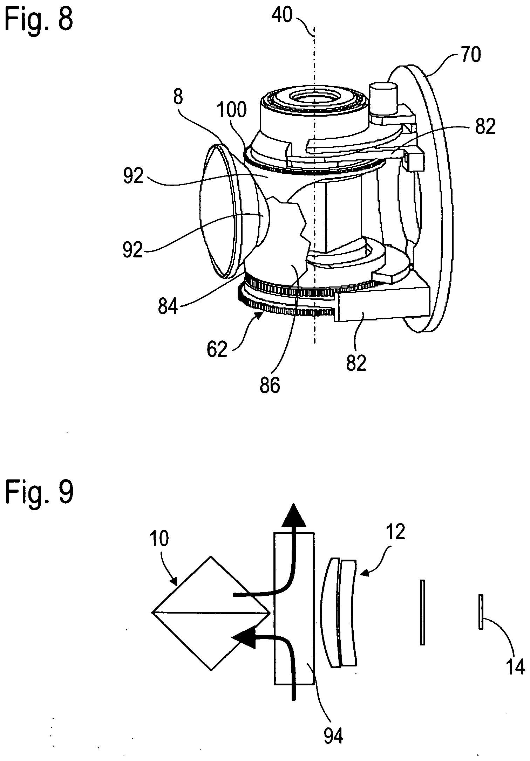

Der Rollrahmen 70 beziehungsweise dessen Strukturplatte ist in Fig. 8 perspektivisch dargestellt. Im linken Bildteil ist die Eingangsoptik 8 dargestellt die mit einer an den Rollrahmen 70 angeformten Lagergabel 82 im Rollrahmen 70 gehalten und um die Nickachse 40 schwenkbar gelagert ist. Im Inneren der Lagergabel 82 ist der Prismenblock erkennbar, der über das unten auf der Achse sichtbare Getriebe 62 mit dem unteren Gabelschenkel verbunden ist.

### Abschirmung

Durch die offenen Prismenstruktur des optischen Gelenks ist das optische Gelenk 10 und auch die Eintrittslinse 48 der Detektoroptik 12 nur unzureichend gegen äußere Strahlung und innere Streustrahlung geschützt. Daher ist die optische Vorrichtung 6 durch eine um das optische Gelenk 10 geführte Abschirmung 84 vor Strahlung geschützt, die zwar durch den Dom 32, nicht aber durch die Eintrittsoptik 8 in die optische Vorrichtung 6 eingetreten ist. Auch vor innerer Streustrahlung schirmt die Abschirmeinheit 84 ab.

Die Abschirmeinheit 84 ist in den Figuren 3 und 8 besonders gut zu sehen. Sie enthält ein Abschirmelement 86 in Form einer Metallfolie. Im gezeigten Ausführungsbeispiel ist dieses metallische und flexible Schirmband in Fig. 3 entsprechend der Schnittzeichnung genau halbiert und in Fig. 8 teilgeschnitten dargestellt, um dort den innen liegenden Prismenblock und das unter der Metallfolie liegende Schwenkelement 92 sichtbar zu machen, das starr mit der Eingangsoptik 8 verbunden ist und auf dem das Abschirmelement 86 aufliegt. Dieses Schwenkelement 92 ist zumindest im hinteren Bereich um das Gelenk 10 geführt und mit einer Öffnung versehen, durch das der aus dem Gelenk 10 austretende Strahlengang hindurch treten kann, und zwar in jeder Betriebs-Winkelstellung der Eingangsoptik 8. Das Abschirmelement 86 ist an der Eingansoptik 8 starr befestigt.

Das Material des Abschirmelements 86 kann je nach Anwendung variieren. Die Verwendung eines metallischen Abschirmelements 86 ist besonders vorteilhaft, da damit auch störende Radarstrahlung abgeschirmt werden kann, die durch Kunststoff ggf. hindurch treten würde.

Das Abschirmelement 86 ist bei einteiliger Ausführung um das optische Gelenk 10 beidseitig oder bei zweiteiliger Ausführung an zumindest einer Seite auf Abwickelvorrichtungen 88 in Form von Rollen beziehungsweise einer Rolle 88 aufgewickelt. Die Abwickelvorrichtungen 88 sind in Fig. 3 gezeigt und in Fig. 8 weggelassen. Bei einer Nickbewegung der Eingangsoptik 8 wird das Abschirmelement 86 ein- beziehungsweise ausgerollt. Die Abwickelvorrichtungen 88 sind starr zum Rollrahmen gelagert, in dem auch die Eingangsoptik 8 und das optische Gelenk 10 gelagert sind.

Das Ein- uns Auswickeln eines Abschirmelements 86 ist in den Figuren 5 bis 7 schematisch dargestellt. Es wird vereinfachend beschrieben, dass zwei Abschirmelemente 86 vorhanden sind. Diese sind an ihrem einen Ende am Schwenkelement 92 und an ihrem anderen Ende in der Abwickelvorrichtung 88 befestigt. Die Abwickelvorrichtungen 88 sind an einem Halter 96 befestigt, so dass das optische Gelenk 10 rundum von Störstrahlung abgeschirmt ist.

Bei geradeaus gerichtetem Gesichtsfeld 30, also einer Verschwenkung um 0° bzw. keiner Verschwenkung sind beide Abschirmelemente 86 gleich weit aus den Abwickelvorrichtungen 88 gezogen, so dass ihre Abschirmflächen gleich groß sind. Bei einer Verschwenkung, wie in Fig. 6 beispielhaft gezeigt, wird ein Abschirmelement 86 aus seiner Abwickelvorrichtung 88 abgewickelt und das andere wird in genau gleichem Umfang eingewickelt, so dass die gesamte Abschirmfläche gleich bleibt. Allerdings variiert die Ausdehnung der Abschirmfläche eines jeden Abschirmelements 86 für sich so dass die Abwickelvorrichtungen als Flächenspender oder Variationsmittel zur Variation der Abschirmfläche beschrieben werden können. Der Flächenspender gibt somit bei einem Verschwenken des Gesichtsfelds 30 entsprechend zusätzliche Abschirmfläche des Abschirmelements 86 aus. Oder anders ausgedrückt: Das Variationsmittel erzeugt eine an eine Verschwenkung des Gesichtsfelds 30 gekoppelte Variation der Abschirmflächenausdehnung seines Abschirmelements 86.

Bei einer maximalen Verschwenkung, die in Fig. 7 gezeigt ist, kann ein Abschirmelement 86 vollständig aufgewickelt sein und das andere ist maximal ausgerollt.

In Fig. 8 ist zu sehen, dass das Schwenkelement 92 einen um das Gelenk 10 geführten Rahmen mit einer Öffnung zur Hindurchführung des Strahlengangs bildet. Bei einem Abwickeln eines Abschirmelements 86 wird dieses auf diesen Rahmen rutschfrei aufgelegt. Ein abgewickeltes Stück Abschirmelement 86 legt sich auf den Rahmen, so dass ein Ziehen über den Rahmen entfällt. Das Vergrößern und Verkleinern der Abschirmfläche geschieht hierdurch sehr reibungsarm. Es wird eine zur Nickbewegung verschiebungsfreie Bewegung des Abschirmelements 86 erreicht, wodurch dieses kräftearm und verschleißarm stets mit der Nickbewegung mitgeführt wird.

Um eine Belastung der Abschirmelemente 86 noch geringer zu halten, ist jede Abwickelvorrichtung 88 mit einem Antrieb zur Antreiben einer Wickelbewegung ausgestattet. Der Antrieb enthält ein Zahnrad 98 das mit dem Getriebezahnrad 66 der Eingangsoptik 8 kämmt. Bei einer Bewegung der Eingangsoptik um die Nickachse, also einem Verschwenken des Gesichtsfelds treibt das Zahnrad 66 das Zahnrad 98 an und somit ein Wickeln der Abwickelvorrichtung 88. Der Antrieb bzw. die Zahnräder 66, 98 sind hierbei so abgestimmt, dass die Wickelgeschwindigkeit genau mit der benötigten Flächenvariation übereinstimmt, so dass ein Zug auf das Abschirmelement 86 vermieden wird. Durch diese mechanische Kopplung von Schwenkelement 92 und Abwickelvorrichtung 88 bei einer Nickbewegung bzw. Verschwenkung des Gesichtsfelds 30 wird das Abschirmelement 86 bei einer Nickbewegung automatisch mit auf- beziehungsweise abgewickelt.

Im dargestellten Ausführungsbeispiel erfolgt diese mechanische Kopplung über die Zahnradkopplung, die auch in Fig. 8 zu sehen ist. Jede Abwickelvorrichtung 88 ist hierbei beidseitig mit einem Stirnrad 98 ausgestattet, das auf einem Zahnrad 66, 100 der Zahnradkopplung kämmt, das direkt mit der Nickrotation mitdreht. Durch den doppelseitigen Antrieb werden asymmetrische Kräfte auf die Abwickelvorrichtung 88 vermieden. Es wird ein Auf- beziehungsweise Abrollen der Abwickelvorrichtung 88 direkt angetrieben, ohne dass eine Kraftübertragung über das Abschirmelement 86 notwendig ist, das somit zumindest im Wesentlichen kraftfrei bleibt.

Durch das Auf- oder Abrollen ist das Abschirmelement 86 ein in der Flächenausdehnung variables Element, wobei eine mechanische Kopplung an die Eingangsoptik 8 eine an eine Verschwenkung um die Nickachse gekoppelte Flächenvariation der Abschirmfläche bewirkt. Das Abschirmelement 86 ist hierbei in seiner Bewegung mit der Bewegung der Eingangsoptik 8 mechanisch zwangsgekoppelt, wobei ein Kraftfluss zur Bewegung des Abschirmelements über Eingangsoptik 8 beziehungsweise ein daran angreifendes Schwenkelement 92 geführt ist. Durch die Abschirmung 84 ist das optische Gelenk 10 vor sämtlicher nicht durch die Ein- oder Austrittsapertur des optischen Gelenks 10 fallender Einstrahlung abgeschirmt.

Wie erwähnt ist die optische Vorrichtung 4 durch drei Einheiten 8, 10, 12 gekennzeichnet, die im Wesentlichen voneinander unabhängig sind. Insofern können die Abstände zwischen diesen Einheiten 8, 10, 12 in der Längsachse beziehungsweise Rollachse 42, beziehungsweise der Symmetrieachse der optischen Vorrichtung 4 in ihren Abständen zueinander variiert werden. Durch den parallelen Strahlengang wird die optische Wirkweise der Elemente 8, 10, 12 zueinander hierbei nicht beeinflusst, wobei jedoch die Strahldivergenz, verursacht durch die Ausdehnung des Gesichtsfelds 30 zu berücksichtigen ist. Insofern ist die optische Vorrichtung 4 besonders dazu geeignet, ein oder mehrere Funktionsmodule aufzunehmen, welches beziehungsweise welche zwischen den einzelnen Elementen 8, 10, 12 im parallelen Strahlengang angeordnet sein können.

Ein solches Anordnungsbeispiel ist in Fig. 9 schematisch skizziert. Das Funktionsmodul 94 ist zwischen dem optischen Gelenk 10 und der Detektoroptik 12 angeordnet. Eine besonders vorteilhafte Anwendung eines Funktionsmoduls 94 ist eine Blendungsabschirmung, die bei einer Blendung von außen zwischen die Elemente 10, 12 eingefahren werden kann oder dauerhaft dort angeordnet ist und entsprechend aktiviert wird. Das erforderliche Regelkommando für ein Funktionsmodul 94 kann über die Bildauswertung in der Suchkopfsignalverarbeitung bereitgestellt werden. Diese Abschirmung ist von der Abschirmeinheit 84 zu unterscheiden, da diese Abschirmung im Strahlengang bzw. im Gesichtsfeld 30 angeordnet ist. Demgegenüber hält die Abschirmeinheit 84 den Strahlengang bzw. das Gesichtsfeld stets frei und greift nie darin ein.

Es sind jedoch auch andere Funktionsmodule 94 denkbar. Ein solches Funktionsmodul 94 kann zur Realisierung einer aktiven Temperaturstabilisierung verwendet werden. Ebenfalls möglich ist ein optisch aktives Element, beispielsweise ein Laser. Auch Strahlteiler sind denkbar und vorteilhaft, Filter oder andere den einfallenden oder nach außen gerichteten Strahlengang beeinflussende optische Elemente. Zwischen den Elementen 8 und 10 und insbesondere zwischen den Elementen 10 und 12 lassen sich mit relativ geringem baulichen Aufwand optische Signale, die zum Beispiel Entfernungsinformationen, Identifikationsinformationen oder Messinformationen beinhalten, im optisch wirkenden Gesichtsfeld 30 ein- und ausgeben.

Bei einer Anordnung zwischen den Elementen 8, 10, 12 liegt ein paralleler Strahlengang vor, der eine einfache optische Beeinflussung, z.B. eine dämpfende oder spektrale optische Beeinflussung, erlaubt. Die Parallelität bezieht sich auf parallel in die Eintrittsapertur der optischen Vorrichtung einfallende Strahlen. Wegen des flächigen Gesichtsfelds 30 treten natürlich auch nicht parallele Strahlen aus der Objektszene 18 in die Eintrittsapertur, deren Nichtparallelität auch zwischen den Elementen 8 und 10 bzw. 10 und 12 wiedergegeben ist. Diese Nichtparallelität steht jedoch nicht im Widerspruch zum hier verwendeten Begriff des parallelen Strahlengangs, der sich auch parallel einfallende Strahlen bezieht. Durch die Parallelität des Strahlengangs ist somit ein Funktionsmodul 94 dort besonders einfach und mit geringen Anforderungen an das Funktionsmodul 94 und die Anpassung der optischen Vorrichtung an das Funktionsmodul 94 integrierbar.

### Bezugszeichenliste

- 2: Lenkflugkörper
- 4: Suchkopf
- 6: Optische Vorrichtung
- 8: Eingangsoptik
- 10: Optisches Gelenk
- 12: Detektoroptik
- 14: Detektor
- 16: Steuereinheit
- 18: Objektszene
- 22: Wirkeinsatz
- 24: Raketenmotor
- 26: Leitwerk
- 28: Aktuator
- 30: Gesichtsfeld
- 32: Dom
- 34: Außenhülle
- 36: Linse
- 38: Linse
- 40: Nickachse
- 42: Rollachse
- 44: Umkehrprisma
- 46: Umkehrprisma
- 48: Linse
- 50: Kühler
- 52: Kühlerfenster
- 54: inertiale Messeinheit
- 56: Hypotenusefläche
- 58: Eintrittsfläche
- 60: Austrittsfläche
- 62: Getriebe
- 64: Zahnrad
- 66: Zahnrad
- 68: Stirnräder
- 70: Rollrahmen
- 72: Direktantrieb
- 74: Stützstruktur
- 76: Stützstruktur
- 78: Gehäusestruktur
- 80: Direktantrieb
- 82: Lagergabel
- 84: Abschirmeinheit
- 86: Abschirmelement
- 88: Abwickelvorrichtung
- 92: Schwenkelement
- 94: Funktionsmodul
- 96: Halter
- 98: Zahnrad
- 100: Zahnrad

## Patentansprüche

1. Optische Vorrichtung (6) zum Ausbilden eines Strahlengangs zwischen einem optischen Endelement (14) an einem Strahlengangende und einer Objektszene (18), in die der Strahlengang über ein Gesichtsfeld (30) des Endelements (14) gelenkt ist, mit
a) einem Ausrichtmittel zum Verschwenken des Gesichtsfelds (30) relativ zu einer vorbestimmten Richtung,
b) einer Endoptik (12),
c) einem optischen Gelenk (10) zum Führen des Strahlengangs aus dem verschwenkten Gesichtsfeld (30) in die Endoptik (12),
d) einer Abschirmeinheit (84) mit einem teilweise um das optische Gelenk (10) geführten Abschirmelement (86), die das optische Gelenk (10) vor nicht durch die Ein- oder Austrittsapertur des optischen Gelenks (10) einfallender Einstrahlung abschirmt,
e) einem mit einer Verschwenkung des Gesichtsfelds (30) mitschwenkendem Schwenkelement (92), wobei eine Seite des Abschirmelements (86) mit einer Bewegung des Schwenkelements (92) gekoppelt ist und eine andere Seite strukturfest zu einem Gehäuse der optischen Vorrichtung (6) gelagert ist, und
f) einem Flächenspender, der dazu vorbereitet ist, bei einem Verschwenken des Gesichtsfelds (30) entsprechend zusätzliche Abschirmfläche des Abschirmelements (86) auszugeben.

2. Vorrichtung (6) nach Anspruch 1,
wobei das Abschirmelement (86) in seiner Bewegung mit einer Bewegung einer Eingangsoptik (8) mechanisch zwangsgekoppelt ist, wobei ein Kraftfluss zur Bewegung über ein an der Eingangsoptik (8) angreifendes Schwenkelement (92) geführt ist.

3. Vorrichtung (6) nach Anspruch 1 oder 2,
wobei die Abschirmeinheit (84) zumindest ein Variationsmittel aufweist und das Abschirmelement (86) in seiner Abschirmflächenausdehnung variabel ist, wobei das Variationsmittel zur Erzeugung einer an eine Verschwenkung des Gesichtsfelds (30) gekoppelten Variation der Abschirmflächenausdehnung vorbereitet ist.

4. Vorrichtung (6) nach einem der vorhergehenden Ansprüche,
wobei die Abschirmeinheit (84) zumindest eine Abwickelvorrichtung (88) aufweist und das Abschirmelement (86) abwickelbar ist.

5. Vorrichtung (6) nach einem der vorhergehenden Ansprüche,
wobei der Flächenspender eine Rolle ist, auf die das Abschirmelement (86) teilweise aufgewickelt ist.

6. Vorrichtung (6) nach einem der vorhergehenden Ansprüche,
wobei das Abschirmelement (86) eine Folie ist.

7. Vorrichtung (6) nach einem der vorhergehenden Ansprüche,
wobei die Abschirmeinheit (84) einen Antrieb aufweist, der eine Bewegung des Abschirmelements (86) von einer strukturfesten Seite des Abschirmelements (86) aus antreibt, wobei bevorzugterweise der Antrieb so ausgeführt ist, dass er das Abschirmelement (86) bei dessen Bewegung zugfrei hält.

8. Vorrichtung (6) nach Anspruch 7,
wobei die Abschirmeinheit (84) eine Abwickelvorrichtung (88) aufweist, auf der das Abschirmelement teilweise aufgerollt ist und der Antrieb ein Drehen der Abwickelvorrichtung (88) antreibt.

9. Vorrichtung (6) nach Anspruch 7 oder 8,
wobei der Antrieb mit einer Bewegung einer Eingangsoptik (8) zwangsgekoppelt ist.

10. Vorrichtung (6) nach einem der Ansprüche 7 bis 9,
wobei der Antrieb ein Zahnrad (98) aufweist, das mit einem mit dem Gesichtsfeld (30) mitbewegten Zahnrad (66, 100) kämmt.

11. Vorrichtung (6) nach einem der vorhergehenden Ansprüche,
wobei das Abschirmelement (86) so gelagert ist, dass es sich bei einer Verschwenkung des Gesichtsfelds (30) rutschfrei auf eine Auflage auflegt.

12. Vorrichtung (6) nach einem der vorhergehenden Ansprüche,
wobei die Abschirmeinheit (84) einen um das optische Gelenk (10) geführten Rahmen mit einer Öffnung zur Hindurchführung des Strahlengangs aufweist und das Abschirmelement (86) so gelagert ist, dass es bei einer Verschwenkung des Gesichtsfelds (30) auf den Rahmen rutschfrei aufgelegt wird.

13. Vorrichtung (6) nach einem der vorhergehenden Ansprüche,
wobei das optische Gelenk (10) ein Umkehrprisma (44, 46) mit einer Eintrittsfläche (58), einer Austrittsfläche (60) und einer Reflektionsfläche (56) aufweist, wobei das Abschirmelement (86) sowohl um die Eintrittsfläche (58) als auch um die Austrittsfläche (60) teilweise herum geführt ist.

14. Suchkopf (4) für einen Lenkflugkörper (2) mit einer optischen Vorrichtung (6) nach einem der vorhergehenden Ansprüche.

## Claims

1. Optical device (6) for forming a beam path between an optical end element (14) at a beam path end and an object scene (18) into which the beam path is directed via a field of view (30) of the end element (14), comprising
a) an alignment means for pivoting the field of view (30) relative to a predetermined direction,
b) an end optical unit (12),
c) an optical articulation (10) for guiding the beam path from the pivoted field of view (30) into the end optical unit (12),
d) a shielding unit (84) comprising a shielding element (86) led partly around the optical articulation (10), which shielding unit shields the optical articulation (10) against incident radiation that is not incident through the entrance or exit aperture of the optical articulation (10),
e) a pivoting element (92) which concomitantly pivots with a pivoting of the field of view (30), one side of the shielding element (86) being coupled with a movement of the pivoting element (92) and another side being mounted in a structurally fixed manner with respect to a housing of the optical device (6), and
f) a surface dispenser, which is prepared for correspondingly issuing additional shielding surface of the shielding element (86) when the field of view (30) is pivoted.

2. Device (6) according to Claim 1,
wherein the shielding element (86) is mechanically forcibly coupled in terms of its movement with a movement of an input optical unit (8), a force flux for the movement being led via a pivoting element (92) acting on the input optical unit (8).

3. Device (6) according to Claim 1 and 2,
wherein the shielding unit (84) has at least one variation means and the shielding element (86) is variable in terms of its shielding surface area, the variation means being prepared for generating a variation of the shielding surface area that is coupled to a pivoting of the field of view (30).

4. Device (6) according to any of the preceding claims,
wherein the shielding unit (84) has at least one unwinding device (88) and the shielding element (86) can be unwound.

5. Device (6) according to any of the preceding claims,
wherein the surface dispenser is a roll onto which the shielding element (86) is partly wound up.

6. Device (6) according to any of the preceding claims,
wherein the shielding element (86) is a film.

7. Device (6) according to any of the preceding claims,
wherein the shielding unit (84) has a drive that drives a movement of the shielding element (86) from a structurally fixed side of the shielding element (86) wherein preferably the drive is embodied such that it keeps the shielding element (86) free of tension during the movement thereof.

8. Device (6) according to Claim 7,
wherein the shielding unit (84) has an unwinding device (88), on which the shielding element is partly rolled up, and the drive drives a rotation of the unwinding device (88) .

9. Device (6) according to Claim 7 or 8,
wherein the drive is forcibly coupled with a movement of an input optical unit (8).

10. Device (6) according to any of Claims 7 to 9,
Wherein the drive has a gearwheel (98) which meshes with a gearwheel (66, 100) concomitantly moved with the field of view (30).

11. Device (6) according to any of the preceding claims,
wherein the shielding element (86) is mounted such that it is placed onto a support in a manner free of slipping when the field of view (30) is pivoted.

12. Device (6) according to any of the preceding claims,
wherein the shielding unit (84) has a frame led around the optical articulation (10) and having an opening for leading the beam path through it, and the shielding element (86) is mounted such that it is placed onto the frame in a manner free of slipping when the field of view (30) is pivoted.

13. Device (6) according to any of the preceding claims,
wherein the optical articulation (10) has a reversing prism (44, 46) having an entrance surface (58), an exit surface (60) and a reflection surface (56), the shielding element (86) being partly led both around the entrance surface (58) and around the exit surface (60).

14. Homing head (4) for a guided missile (2) comprising an optical device (6) according to any of the preceding claims.

## Revendications

1. Dispositif optique (6) pour former un parcours optique entre un élément d'extrémité optique (14) à une extrémité de parcours optique et une scène d'objet (18), dans lequel le parcours optique est dévié par un champ de vision (30) de l'élément d'extrémité (14), comprenant
a) un moyen d'orientation destiné à faire pivoter le champ de vision (30) par rapport à une direction prédéfinie,
b) une optique d'extrémité (12),
c) une articulation optique (10) destinée à guider le parcours optique depuis le champ de vision (30) dans l'optique d'extrémité (12),
d) une unité d'écran protecteur (84) comprenant un élément formant écran (86) qui passe au moins partiellement autour de l'articulation optique (10), lequel protège par écran l'articulation optique (10) contre un rayonnement qui n'est pas incident à travers l'ouverture d'entrée ou de sortie de l'articulation optique (10),
e) un élément pivotant (92) qui pivote en même temps qu'un pivotement du champ de vision (30), un côté de l'élément formant écran (86) étant couplé à un mouvement de l'élément pivotant (92) et un autre côté étant monté structurellement fixe par rapport à un boîtier du dispositif optique (6), et
f) un distributeur de surface qui est préparé pour, lors d'un pivotement du champ de vision (30), délivrer des surfaces formant écran supplémentaires correspondantes de l'élément formant écran (86).

2. Dispositif (6) selon la revendication 1, l'élément formant écran (86) étant, dans son mouvement, couplé mécaniquement de force avec un mouvement d'une optique d'entrée (8), un flux de force servant au mouvement étant guidé par un élément pivotant (92) qui vient en prise sur l'optique d'entrée (8).

3. Dispositif (6) selon la revendication 1 ou 2, l'unité d'écran protecteur (84) possédant au moins un moyen de variation et l'élément formant écran (86) ayant une expansion de surface d'écran protecteur variable, le moyen de variation étant préparé pour générer une variation de l'expansion de surface d'écran protecteur couplée à un pivotement du champ de vision (30).

4. Dispositif (6) selon l'une des revendications précédentes, l'unité d'écran protecteur (84) possédant au moins un dispositif dérouleur (88) et l'élément formant écran (86) étant déroulable.

5. Dispositif (6) selon l'une des revendications précédentes, le distributeur de surface étant un rouleau sur lequel l'élément formant écran (86) est partiellement enroulé.

6. Dispositif (6) selon l'une des revendications précédentes, l'élément formant écran (86) étant un film.

7. Dispositif (6) selon l'une des revendications précédentes, l'unité d'écran protecteur (84) possédant un mécanisme d'entraînement qui produit un mouvement de l'élément formant écran (86) depuis un côté structurellement fixe de l'élément formant écran (86), le mécanisme d'entraînement étant de préférence réalisé de telle sorte qu'il maintient l'élément formant écran (86) sans exercer de traction lors de son mouvement.

8. Dispositif (6) selon la revendication 7, l'unité d'écran protecteur (84) possédant un dispositif dérouleur (88) sur lequel l'élément formant écran est partiellement enroulé et le mécanisme d'entraînement produisant une rotation du dispositif dérouleur (88).

9. Dispositif (6) selon la revendication 7 ou 8, le mécanisme d'entraînement étant couplé de force avec un mouvement de l'optique d'entrée (8).

10. Dispositif (6) selon l'une des revendications 7 à 9, le mécanisme d'entraînement possédant une roue dentée (98) qui s'engrène avec une roue dentée (66, 100) qui accompagne le mouvement du champ de vision (30).

11. Dispositif (6) selon l'une des revendications précédentes, l'élément formant écran (86) étant supporté de telle sorte que lors d'un pivotement du champ de vision (30), il repose sans friction sur un appui.

12. Dispositif (6) selon l'une des revendications précédentes, l'unité d'écran protecteur (84) possédant un cadre qui est muni d'une ouverture pour le passage à travers celle-ci du parcours optique et qui passe autour de l'articulation optique (10), et l'élément formant écran (86) étant supporté de telle sorte que lors d'un pivotement du champ de vision (30), il vient reposer sans friction sur le cadre.

13. Dispositif (6) selon l'une des revendications précédentes, l'articulation optique (10) possédant un prisme d'inversion (44, 46) muni d'une surface d'entrée (58), d'une surface de sortie (60) et d'une surface de réflexion (56), l'élément formant écran (86) étant à la fois amené partiellement autour de la surface d'entrée (58) et de la surface de sortie (60).

14. Tête chercheuse (4) pour un missile guidé (2) comprenant un dispositif optique (6) selon l'une des revendications précédentes.
